# EUROPEAN PATENT SPECIFICATION

(11) **EP 1 841 186 B1**
(45) Date of publication and mention of the grant of the patent: **26.11.2008**
(21) Application number: 06112135.6
(22) Date of filing: 31.03.2006
(51) Int. Cl.: H04M 1/22, H04M 1/247

(54) **Method and apparatus for indicating mobile electronic device status or state**
Verfahren und Vorrichtung zur Anzeige des Status oder Zustandes einer mobilen elektronischen Vorrichtung
Procédé et appareil pour l'indication du statut ou de l'état du dispositif électronique mobile

(43) Date of publication of application: 03.10.2007
(73) Proprietor: Research In Motion Limited, Waterloo, Ontario N2L 3W8 (CA)
(72) Inventor: Scott, Sherryl Lee Lorraine, Toronto, Ontario M5T 1Y9 (CA)
(74) Representative: Rickard, David John

(56) References cited:
- EP-A- 1 324 578
- EP-A- 1 467 542
- EP-A- 1 489 483
- WO-A-20/04102977
- US-A1- 2004 119 601
- US-A1- 2004 171 410
- US-A1- 2004 203 490

## Description

The invention relates generally to mobile electronic devices. More particularly, the invention relates to a method and apparatus for indicating mobile electronic device status and/or state.

The use of mobile electronic, or communication devices has increased dramatically over recent years as users wish to be able to be stay connected when they are away from a landline telephone or desktop computer. Some mobile communication devices also serve as a personal digital assistant for tracking meetings and daily activities. For users who are on the go, ease of use and speed are typical priorities. As speed is important, users typically start to use their device without verifying the status of the device since they are so concentrated on making a call, checking email or their calendar, among other things.

There are times when users attempt to use their mobile communication device while the device is in a locked mode. Frustration sets in once the user realizes that their mobile electronic device is in the locked mode and has to be unlocked for the user to use the device.

Typically, users are required to look at their display screen in order to determine the status, or state, of their device. This is, however, not an easy task since the user has to focus on what is being displayed on the display screen and divert their attention away from other tasks at hand. With the size of the screens in mobile communication devices, this information may not be immediately available to the user without having to stare intently at the screen for a few seconds. Furthermore, information concerning the device state, or status, is not readily available to the user.

US2004/119601 discloses a method whereby illumination regions of a portable device can be selected for illumination, whereby the pattern of illumination may be associated with an activity of the portable device. US2004/171410 discloses status information being communicated to a user of a communication device by illuminating backlights according to a pattern corresponding to the status information. EP1467542 discloses a device having a light indicator for showing different activities and/or status information, in which a joy stick button is transparent to operate as said light indicator showing at least two colours. EP1489483 discloses a device having a multicolor light emitting track ball capable of emitting different colors, comprising a light transmitting ball, a light transmitting case and a plurality of light sources disposed in the case having a cover and emitting different colors of light to illuminate the ball by radiating lights to the ball. EP1324578 discloses a communication apparatus that notifies a user that one of a plurality of events has occurred. A light emitting unit emits light based on a light emission pattern designated in correspondence with the event. WO2004/102977 discloses illuminating a user-activatable control in connection with detection of at least a first type of communication received or transmitted from a communications device. The user-activatable control may comprise a trackball.

It would be beneficial to have a means for indicating a user profile associated with a ring volume status of a mobile electronic device whereby the user is provided an audible or visual, and tactile indication the mobile communication device in order to indicate the ring volume status.

It is, therefore, desirable to provide a novel method and apparatus for a user profile associated with a ring volume status of a mobile electronic device.

Preferably embodiments of the invention obviate or mitigate at least one disadvantage of previous methods of indicating a user profile associated with a ring volume status of a mobile electronic device.

### GENERAL

In one aspect, there is preferably provided a method of indicating a user profile associated with a ring volume status of a mobile electronic device comprising the steps of: retrieving intensity level information associated with a colour used to indicate said ring volume status; illuminating a trackball or an area surrounding the trackball of said mobile electronic device with an intensity of said colour representative of said intensity level information to provide an indication of said ring volume status; determining a change in the user profile associated with the rind volume status; retrieving intensity level information associated with said changed user profile; and illuminating said trackball or said area surrounding the trackball with an intensity of said colour representative of said intensity level information associated with said changed user profile.

In another aspect, there is preferably provided an apparatus for indicating a user profile associated with a ring volume status of a mobile electronic device comprising: a set of light emitting diodes 'LEDs' located at a trackball or trackball area; means adapted to transmit a signal comprising intensity level information for a colour used to indicate said ring volume status to said set of LEDs; wherein said set of LEDs is adapted to provide a light at an intensity level corresponding to said intensity level information to illuminate said trackball or trackball area of said mobile communication device to indicate said ring volume status; means for determining a change in the user profile associated with the rind volume status; and means for retrieving intensity level information associated with said changed user profile and transmitting a signal comprising said intensity level information associated with said changed user profile to said set of LEDs; wherein said set of LEDs is adapted to illuminate said trackball or said area surrounding the trackball with an intensity of said colour representative of said intensity level information associated with said changed user profile.

Other aspects and features will become apparent to those ordinarily skilled in the art upon review of the following description of specific embodiments of the invention in conjunction with the accompanying figures.

### BRIEF DESCRIPTION OF THE DRAWINGS

Embodiments will now be described, by way of example only, with reference to the attached Figures, wherein:
Fig. 1 is a front view of a mobile electronic device;
Fig. 2 is a schematic view of apparatus for indicating mobile electronic device status; and

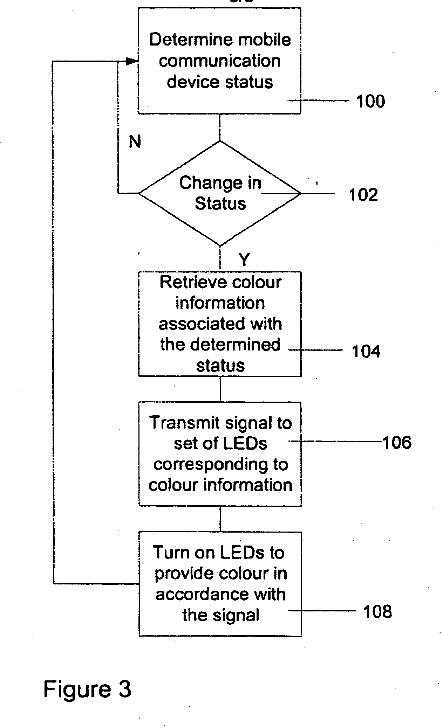

Fig. 3 is a flowchart outlining a method of indicating mobile electronic device status.

### DESCRIPTION OF PREFERRED EMBODIMENTS

Generally, a method and system for indicating mobile electronic device status is provided.

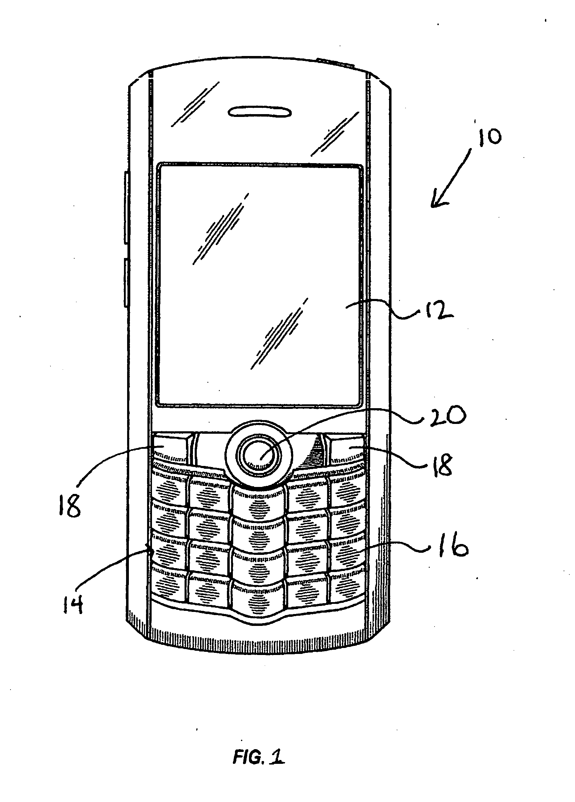

Turning to Figure 1, a schematic diagram of an embodiment of a mobile communication device is shown. The mobile communication device 10 includes a display 12 along with a keyboard/keypad area 14 having a keyboard 16 installed. Between the display 12 and the keyboard 16 is a set of keys, or buttons, 18 and a trackball 20.

In one embodiment, a set of LEDs is located underneath the trackball of the mobile electronic device. As will be disclosed, the set of LEDs provide a visual indication to a user relating to a status of the mobile communication device. The LEDs may be a single colour LED or may be multi-coloured to provide a spectrum of colours. Other methods of providing visual or colour indicators to a user are also contemplated.

It will be appreciated that "colour" can be defined in many ways, for example in terms of human perception, pigments used in paint, collections of wavelengths of light, or "colour spaces". Arguably the most famous colour space for the purposes of video displays is RGB space, so named because each displayable colour is represented by the red, green and blue components (each often, but not necessarily, specified as having integer values in a range from 0 to 255) that, when added together, create a colour. However, the RGB colour space does not always conform to human expectations for a colour system. For example, adding pure red and pure green yields yellow, and the "midpoint" between pure red and green is a very dingy shade of yellow.

Many other colour spaces are known for defining colours, typically by means of three coordinates, and formulas for mapping one space to another. A system known to many who use popular graphics programs such as *Photoshop*^{™} is HSL space, in which the coordinates represent hue, saturation and luminance. Hue is measured on a circular scale corresponding to the additive colour wheel (red, yellow, green, cyan, blue, magenta). Saturation is zero for grey tones (i.e. colours having all RGB components equal) and reaches the maximum value for colours having at least one RGB component equal zero. Luminance is related to the perceived brightness of the colour, but in an inconsistent manner; for example, yellow and blue have the same luminance. There are related systems such Hue-Saturation-Value and Hue-Saturation-Brightness.

A more faithful representation of perceived brightness is found in the Y coordinate (also called luminance) of YUV space, one version of which is used in the JPEG image compression scheme. In the absence of the two chrominance coordinates U and V, pixel-by-pixel luminance information alone is all that is needed to form a blank-and-white, o.e. grey-tone, version of an image.

In varying colours to represent changes in the state of a dynamic characteristic, it is frequently advantageous - both conceptually and from a programming standpoint - to represent and transform the colours in HSL or YUV space, even though a conversion of colour coordinates to RGB values will ultimately be needed to drive a video display. As one example, a simple rotation of a hue from one value to another may involve first increasing one of the primary additive colours (red, blue and green) and then decreasing a different one. As another example, "greying-out" a graphic image by decreasing the saturation of each of its pixels typically requires simultaneously changing all three RGB values for each pixel. It will be understood that the discussion relating to the colours in the follow description may also be enhanced by these other colour characteristics or spaces.

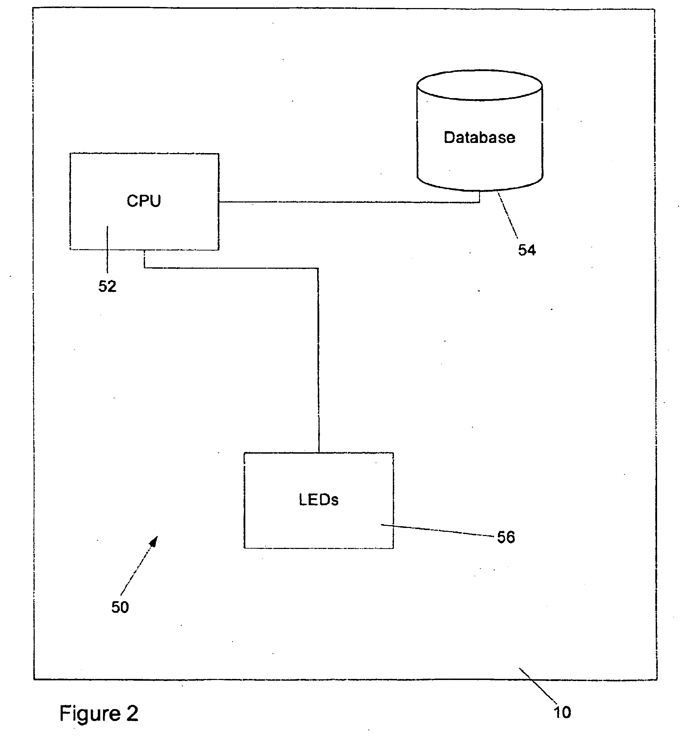

Turning to Figure 2, apparatus for implementing a method of indicating mobile electronic device status is shown. The apparatus 50, located within the mobile electronic, or communication, device 10, includes a processor 52, which may be a mobile electronic device processor or a separate processor, a database 54 and a set of LEDs 56.

The database 54 stores information, preferably in the form of a table, which includes a list of mobile communication device statuses and a colour (or intensity of a colour) associated with each of the device statuses. The processor 52 monitors the status, or state, of the device 10 and communicates with the database 54 to retrieve the information stored in the database 54. The processor 52 also communicates with the set of LEDs 56 to transmits signals to produce a colour to illuminate the trackball. It will be understood that the area surrounding the trackball may also be illuminated by the set of LEDs as well as the area surrounding the set of buttons 18. In the following description, whenever there is mention of the trackball being illuminated, it will be understood that the area surrounding the trackball and/or the set of buttons may also be illuminated.

In one embodiment, the apparatus 50 is designed to indicate when the trackball 20 can be used to initiate an action. In other words, the user can simply glance at the mobile electronic device to look at the colour of the light illuminating the trackball 20 to determine the state of the electronic device. In this embodiment, the set of LEDs 56 are preferably red, yellow and green with red representing a locked mode whereby use of the device is password protected, yellow representing a password mode whereby a user is entering a password in order to exit the locked mode and green representing an unlocked mode whereby the device may be used. The colours have been arbitrarily selected for this example and it will be understood that other colours may be used. The selection of red, yellow and green in the current embodiment represents traffic light colours with which a user will be more familiar. The database 54 stores the information relating to the various device statuses and the corresponding colour representing the status.

In this example, it is assumed that the mobile communication device 10 is initially in a locked mode whereby a red LED illuminates the trackball 20.

In operation, the processor 52 monitors the status of the mobile electronic, or communication, device 10 and determines that the device is in the locked mode (step 100). The processor 52 continues to monitor the mobile electronic device to determine if the status has changed (step 102). If no change is sensed, the processor 52 continues to monitor the status (step 100). When the user decides to use the device, the processor 52 senses a change in the status from the locked, or password protected, mode to the password mode. The processor 52 then accesses the database 54 (step 104) to retrieve the colour (Yellow) associated with the password mode and transmits a signal to the set of LEDs 56 (step 106) causing the LEDs to provide a yellow light to illuminate the trackball 20. The set of LEDs 56 then provide the necessary illumination to the trackball (step 108). The yellow-illuminated trackball provides a visual to the user that the mobile communication device is in the password mode. The processor 52 then returns to monitoring the status of the mobile communication device (step 100).

After the user has logged in correctly, by entering the correct password, the mobile communication device 10 is in the unlocked mode. Once the device 10 is in the unlocked mode, the user may freely access the applications within the mobile electronic device and to use the trackball. When the processor 52 senses this status change (step 102), the processor 52 accesses the database 54 (step 104) to determine the colour (Green) corresponding to the unlocked mode. The processor 52 then transmits a signal to the set of LEDs 56 (step 106) to provide a green colour to the trackball 20, indicating the unlocked mode. The green LED or LEDs are turned on (step 108) and the processor 52 then returns to monitoring and determining the mobile communication device status (step 100).

By illuminating the trackball 20 from underneath the trackball, a user is able to quickly glance at their mobile communication device 10 to determine its status which in this case is the mode in which the mobile communication device is in.

In another embodiment, the set of LEDs 56 are used to indicate different user profiles associated with the ring volume of the mobile communication device 10. In this embodiment, a single coloured LED may be used to indicate the status, however, the intensity of the illumination provides the indicator status to the user. The table below provides an example of the information stored in the database 54 for this embodiment.

| Profile | Colour Intensity |
|---|---|
| Loud | 100% |
| Vibrate | Flashing |
| Quiet | 0% |
| Default | 50% |

In operation, assuming that the mobile communication device 10 is in the default user profile, the set of LEDs 56 provides illumination at an intensity of 50% to the trackball 20. When the processor 52 senses that the user has changed their user profile (step 102), the processor 52 accesses the database 54 (step 104) to retrieve the intensity level corresponding to the new user profile. If the user profile is changed to Loud, the processor 52 retrieves the intensity level (100%) corresponding to the loud user profile and transmits a signal to the set of LEDs 56 (step 106) to provide light at an intensity of 100%. Similarly, if the new user profile is the Vibrate user profile, the LEDs receive a signal from the processor 52 to provide a flashing light to illuminate the trackball 20 and if the new user profile is Quiet, the set of LEDs is turned off so that no light is provided to illuminate the trackball 20 (step 108).

The intensities which have been selected above are for example only and are not meant to be restrictive to the implementation of the method or system. It will be understood that for this embodiment, the selected intensities must be distinguishable to the human eye such that the user can simply glance at the mobile communication device to determine the current user profile.

In yet a further embodiment, the method and apparatus are provided for indicating a status of an application on the mobile communication device. For instance, if a user has a meeting set up in a calendar application, the colour green may indicate that the user has a meeting coming up within the next hour, more specifically that there are between 10 and 60 minutes before the meeting. The colour yellow may be used to indicate that there is between 5 and 10 minutes left before the meeting. The colour red may be used to indicate that there is less than five minutes before the meeting. A flashing red light may be used to indicate that the scheduled meeting time has passed. Therefore, when the user sees a red light illuminating the trackball 20, the user knows that the meeting is starting within 5 minutes and therefore needs to proceed to the meeting in order to ensure they are not late. Although solid colours are preferred, the colours may be mixed to indicate different time frames within the ranges provided. Furthermore, different light characteristics such as saturation or intensity may be used to provide the necessary visual indication to the user.

As with the examples above, the processor 52 continuously monitors the time frame status of the meeting and accesses the database 54 whenever the time frame status has changed to retrieve the colour corresponding with the new time frame status. The new colour (or colour intensity) is then used to illuminate the trackball 20. This provides the user with a visual indicator on the face of the mobile communication device allowing the user to quickly glance at their device to determine the amount of time before their meeting or appointment or more broadly, the time frame status. There is no need for the user to look at the display to find out the exact time of day to determine the amount of time before the meeting as the colour illuminating the trackball provides a general visual indicator with the necessary information to the user in a quicker manner.

In yet a further embodiment, the method and apparatus may be used to indicate a status of the mobile communication device battery. In one example, a possible colour representation may be if the battery has a battery life of 50% or more, the set of LEDs provides a green light, if the battery has a battery life of between 15 and 50%, the set of LEDs provides a yellow light and if the battery has a battery life of less than 15% (indicating a need for recharging), the set of LEDs provides a red light.

It will be understood that other mobile communication device statuses and states such as connectivity or email status may also be displayed using the methods and apparatuses described in this specification.

Along with visual indications, the mobile electronic device may also provide audible or tactile indicators to enhance the method and system. For example, tactile indicators such as altering the temperature of the device to indicate device state, or status to a user. Also, vibration of the mobile communication device or the provision of a message on the display may be provided to enhance the visual indicators.

In an alternative embodiment, the illumination of the trackball 20 may be used to indicate one mobile communication device status, or state, such as the device state, the illumination of the area surrounding the trackball 20 may be used to indicate a second mobile communication device status, or stat, such as user profile information while the illumination of the area surrounding the set of buttons 18 may be used to indicate a third mobile communication device status, or state, such as the battery level. Depending on the number of areas available for illumination, any number of different mobile communication device statuses may be displayed for the user.

In a further embodiment, instead of constantly monitoring the mobile communication device status, each time a status changes, a signal may be transmitted to the processor 52 indicating the change thereby causing the processor 52 to access the database 54 for the colour information, or indicator information. In this manner, the processor does not have to constantly monitor the status of the mobile communication device.

In yet a further embodiment, the indicators may be associated with any type of user input apparatus and is not restricted to simply a trackball. For instance, the button area or under the keys of the keypad/keyboard.

The above-described embodiments are intended to be examples only. Alterations, modifications and variations may be effected to the particular embodiments by those of skill in the art without departing from the scope, which is defined solely by the claims appended hereto.

## Claims

1. A method of indicating a user profile associated with a ring volume status of a mobile electronic device comprising the steps of:
retrieving (104) intensity level information associated with a colour used to indicate said ring volume status:
illuminating (106) a trackball (20) or an area surrounding the trackball of said mobile electronic device (10) with an intensity of said colour representative of said intensity level information to provide an indication of said ring volume status;
determining a change in the user profile associated with the ring volume status;
retrieving intensity level information associated with said changed user profile; and
illuminating said trackball (20) or said area surrounding the trackball with an intensity of said colour representative of said intensity level information associated with said changed user profile.

2. The method of claim 1 further comprising the step, occurring after said step of retrieving (104), of:
transmitting a signal, representative of said intensity level information associated with said colour, to a set of light emitting diodes 'LEDs' (56).

3. The method of any one of the preceding claims wherein said step of retrieving comprises the step of:
searching a database (54) for said intensity level information associated with said colour used to indicate said ring volume status.

4. The method of any one of the preceding claims further comprising:
activating audible or tactile indicators also associated with the ring volume status.

5. Apparatus for indicating a user profile associated with a ring volume status of a mobile electronic device comprising:
a set of light emitting diodes 'LEDs' (56) located at a trackball or at an area surrounding the trackball;
means (52) adapted to transmit a signal comprising intensity level information for a colour used to indicate said ring volume status to said set of LEDs;
wherein said set of LEDs (56) is adapted to provide a light at an intensity level corresponding to said intensity level information to illuminate said trackball or said area surrounding the trackball of said mobile communication device to indicate said ring volume status;
means for determining a change in the user profile associated with the ring volume status; and
means for retrieving intensity level information associated with said changed user profile and transmitting a signal comprising said intensity level information associated with said changed user profile to said set of LEDs;
wherein said set of LEDs (56) is adapted to illuminate said trackball (20) or said area surrounding the trackball with an intensity of said colour representative of said intensity level information associated with said changed user profile.

6. The apparatus of claim 5 wherein said intensity level information and user profiles are stored in a stable.

7. The apparatus of claim 5 or claim 6 wherein said set of LEDs (56) comprises:
single-coloured LEDs.

8. The apparatus of any one of claims 5 to 7 wherein said set of LEDs comprises at least one LED.

9. The apparatus of any one of claims 5 to 8 further comprising an audible or tactile indicator adapted to provide an audible or tactile signal indicative of said ring volume device status.

10. A mobile electronic device having an apparatus for indicating a user profile associated with a ring volume status of a mobile electronic device according to any one of claims 5 to 9.

11. A computer program product for indicating a user profile associated with a ring volume status of a mobile electronic device, said computer program product comprising a computer readable medium embodying program codes means for implementing on a mobile electronic device the method of any one of claims 1 to 4.

## Patentansprüche

1. Verfahren zum Anzeigen eines Benutzerprofils, das einem Ruflautstärkenstatus einer mobilen elektronischen Vorrichtung zugeordnet ist, umfassend die folgenden Schritte:
das Abrufen (104) von Intensitätsstufeninformationen, die einer Farbe zugeordnet sind, welche zum Anzeigen des Ruflautstärkenstatus verwendet wird;
das Beleuchten (106) eines Trackballs (20) der mobilen elektronischen Vorrichtung (10) oder eines diesen Trackball umgebenden Bereichs mit einer Intensität der Farbe, die repräsentativ ist für die Intensitätsstufeninformationen, um eine Anzeige des Ruflautstärkenstatus bereitzustellen;
das Feststellen einer Änderung in dem Benutzerprofil, das dem Ruflautstärkenstatus zugeordnet ist;
das Abrufen von Intensitätsstufeninformationen, die dem geänderten Benutzerprofil zugeordnet sind;
und
das Beleuchten des Trackballs (20) oder des diesen Trackball umgebenden Bereichs mit einer Intensität der Farbe, die repräsentativ ist für die Intensitätsstufeninformationen, die dem geänderten Benutzerprofil zugeordnet sind.

2. Verfahren gemäß Anspruch 1, des Weiteren umfassend den folgenden Schritt, welcher nach dem Schritt des Abrufens (104) erfolgt:
das Übertragen eines Signals, das repräsentativ ist für die Intensitätsstufeninformationen, die der Farbe zugeordnet sind, zu einer Gruppe von LEDs (Light Emitting Diodes - Leuchtdioden) (56).

3. Verfahren gemäß einem der vorherigen Ansprüche, wobei der Schritt des Abrufens den folgenden Schritt umfasst:
das Durchsuchen einer Datenbank (54) nach den Intensitätsstufeninformationen, die der Farbe zugeordnet sind, welche zum Anzeigen des Ruflautstärkenstatus verwendet wird.

4. Verfahren gemäß einem der vorherigen Ansprüche, des Weiteren umfassend:
das Aktivieren von akustischen oder fühlbaren Anzeigen, die ebenfalls dem Ruflautstärkenstatus zugeordnet sind.

5. Vorrichtung zum Anzeigen eines Benutzerprofils, das einem Ruflautstärkenstatus einer mobilen elektronischen Vorrichtung zugeordnet ist, umfassend:
einer Gruppe von LEDs (Light Emitting Diodes - Leuchtdioden) (56), die sich auf einem Trackball oder in einem diesen Trackball umgebenden Bereich befinden;
Mittel (52), die dazu eingerichtet sind, ein Signal, das Intensitätsstufeninformationen für eine Farbe umfasst, welche zum Anzeigen des Ruflautstärkenstatus verwendet wird, zu der Gruppe von LEDs zu übertragen;
wobei die Gruppe von LEDs (56) dazu eingerichtet ist, Licht in einer Intensitätsstufe zu erzeugen, die den Intensitätsstufeninformationen entspricht, um den Trackball der mobilen Kommunikationsvorrichtung oder den diesen Trackball umgebenden Bereich zu beleuchten, um den Ruflautstärkenstatus anzuzeigen;
Mittel zum Feststellen einer Änderung in dem Benutzerprofil, das dem Ruflautstärkenstatus zugeordnet ist; und
Mittel zum Abrufen von Intensitätsstufeninformationen, die dem geänderten Benutzerprofil zugeordnet sind, und zum Übertragen eines Signals, das diese Intensitätsstufeninformationen umfasst, die dem geänderten Benutzerprofil zugeordnet sind, zu der Gruppe von LEDs;
wobei die Gruppe von LEDs (56) dazu eingerichtet ist, den Trackball (20) oder den diesen Trackball umgebenden Bereich mit einer Intensität der Farbe zu beleuchten, die repräsentativ ist für die Intensitätsstufeninformationen, die dem geänderten Benutzerprofil zugeordnet sind.

6. Vorrichtung gemäß Anspruch 5, wobei die Intensitätsstufeninformationen und Benutzerprofile in einer Tabelle gespeichert werden.

7. Vorrichtung gemäß Anspruch 5 oder Anspruch 6, wobei die Gruppe von LEDs (56) umfasst:
einfarbige LEDs.

8. Vorrichtung gemäß einem der Ansprüche 5 bis 7, wobei die Gruppe von LEDs mindestens eine LED umfasst.

9. Vorrichtung gemäß einem der Ansprüche 5 bis 8, des Weiteren umfassend eine akustische oder fühlbare Anzeige, die eingerichtet ist zum Bereitstellen eines akustischen oder fühlbaren Signals, das Auskunft über den Ruflautstärkengerätestatus gibt.

10. Mobile elektronische Vorrichtung, die eine Vorrichtung zum Anzeigen eines Benutzerprofils aufweist, das einem Ruflautstärkenstatus einer mobilen elektronischen Vorrichtung gemäß einem der Ansprüche 5 bis 9 zugeordnet ist.

11. Computerprogrammprodukt zum Anzeigen eines Benutzerprofils, das einem Ruflautstärkenstatus einer mobilen elektronischen Vorrichtung zugeordnet ist, wobei das Computerprogrammprodukt ein computerlesbares Medium umfasst, welches Programmcodemittel verkörpert, mit denen auf einer mobilen elektronischen Vorrichtung das Verfahren gemäß einem der Ansprüche 1 bis 4 implementiert wird.

## Revendications

1. Un procédé destiné à indiquer un profil d'utilisateur associé à un état de volume de sonnerie d'un dispositif électronique mobile comprenant les opérations suivantes :
la récupération (104) d'informations de niveau d'intensité associées à une couleur utilisée pour indiquer ledit état de volume de sonnerie,
l'illumination (106) d'une boule de commande (20) ou d'une zone entourant la boule de commande dudit dispositif électronique mobile (10) avec une intensité de ladite couleur représentative desdites informations de niveau d'intensité de façon à fournir une indication dudit état de volume de sonnerie,
la détermination d'une modification dans le profil d'utilisateur associée à l'état de volume de sonnerie,
la récupération d'informations de niveau d'intensité associées audit profil d'utilisateur modifié, et
l'illumination de ladite boule de commande (20) ou de ladite zone entourant la boule de commande avec une intensité de ladite couleur représentative desdites informations de niveau d'intensité associées audit profil d'utilisateur modifié.

2. Le procédé selon la revendication 1 comprenant en outre l'opération, se produisant après ladite opération de récupération (104), de :
transmission d'un signal, représentatif desdites informations de niveau d'intensité associées à ladite couleur, à un ensemble de diodes électroluminescentes (LED) (56).

3. Le procédé selon l'une quelconque des revendications précédentes où ladite opération de récupération comprend l'opération de :
interrogation d'une base de données (54) à la recherche desdites informations de niveau d'intensité associées à ladite couleur utilisée pour indiquer ledit état de volume de sonnerie.

4. Le procédé selon l'une quelconque des revendications précédentes comprenant :
l'activation d'indicateurs sonores ou tactiles également associés à l'état de volume de sonnerie.

5. Un appareil destiné à indiquer un profil d'utilisateur associé à un état de volume de sonnerie d'un dispositif électronique mobile comprenant :
un ensemble de diodes électroluminescentes (LED) (56) placées sur une boule de commande ou dans une zone entourant la boule de commande,
un moyen (52) adapté de façon à transmettre un signal comprenant des informations de niveau d'intensité pour une couleur utilisée pour indiquer ledit état de volume de sonnerie audit ensemble de LED,
où ledit ensemble de LED (56) est adapté de façon à fournir une lumière à un niveau d'intensité correspondant auxdites informations de niveau d'intensité de façon à illuminer ladite boule de commande ou ladite zone entourant la boule de commande dudit dispositif de communication mobile de façon à indiquer ledit état de volume de sonnerie,
un moyen de déterminer une modification dans le profil d'utilisateur associée à l'état de volume de sonnerie, et
un moyen de récupérer des informations de niveau d'intensité associées audit profil d'utilisateur modifié et de transmettre un signal comprenant lesdites informations de niveau d'intensité associées audit profil d'utilisateur modifié audit ensemble de LED.
où ledit ensemble de LED (56) est adapté de façon à illuminer ladite boule de commande (20) ou ladite zone entourant la boule de commande d'une intensité de ladite couleur représentative desdites informations de niveau d'intensité associées audit profil d'utilisateur modifié.

6. L'appareil selon la revendication 5 où lesdites informations de niveau d'intensité et les profils d'utilisateur sont conservés dans une table.

7. L'appareil selon la revendication 5 ou 6 où ledit ensemble de LED (56) comprend :
des LED unicolores.

8. L'appareil selon l'une quelconque des revendications 5 à 7 où ledit ensemble de LED comprend au moins un LED.

9. L'appareil selon l'une quelconque des revendications 5 à 8 comprenant en outre un indicateur sonore ou tactile adapté de façon à fournir un signal sonore ou tactile indicatif dudit état de dispositif de volume de sonnerie.

10. Un dispositif électronique mobile possédant un appareil destiné à indiquer un profil d'utilisateur associé à un état de volume de sonnerie d'un dispositif électronique mobile selon l'une quelconque des revendications 5 à 9.

11. Un programme informatique destiné à indiquer un profil d'utilisateur associé à un état de volume de sonnerie d'un dispositif électronique mobile, ledit programme informatique comprenant un support lisible par ordinateur incorporant du code de programme destiné à mettre en oeuvre sur un dispositif électronique mobile le procédé selon l'une quelconque des revendications 1 à 4.
